Europäisches Patentamt

European Patent Office

Office européen des brevets

(11) Numéro de publication: **0 118 378**
**B1**

# FASCICULE DE BREVET EUROPÉEN

(45) Date de publication du fascicule du brevet:
17.12.86

(51) Int. Cl.⁴: **C 21 C 7/00,** C 21 C 7/06

(21) Numéro de dépôt: 84420034.5

(22) Date de dépôt: 01.03.84

(54) **Produit composite à enveloppe métallique tubulaire agrafée et âme pulvérulente apte à l'enroulage.**

(30) Priorité: 03.03.83 FR 8303967

(43) Date de publication de la demande:
12.09.84 Bulletin 84/37

(45) Mention de la délivrance du brevet:
17.12.86 Bulletin 86/51

(84) Etats contractants désignés:
AT BE DE GB IT LU NL SE

(56) Documents cité:
EP-A-0 034 994
WO-A-82/03574
FR-A-1 512 351
FR-A-2 446 139
FR-A-2 511 039
US-A-3 235 954
US-A-3 895 086

(73) Titulaire: VALLOUREC, 7, place du Chancelier
Adenauer, F-75016 Paris (FR)

(72) Inventeur: Douchy, Michel, Route de Solesmes
Vertain, F-59730 Solesmes (FR)

(74) Mandataire: de Passemar, Bernard, VALLOUREC 7
Place du Chancelier Adenauer, F-75016 Paris (FR)

## Description

L'invention concerne un produit composite à enveloppe métallique tubulaire agrafée, contenant une âme en matière pulvérulente ou granulaire compactée, apte à être facilement enroulé, par exemple sur un tambour, puis déroulé et dressé.

Des produits composites tubulaires souvent appelés "fil fourré", sont utilisés principalement pour le traitement de bains métalliques liquides, également pour le soudage ou encore pour d'autres applications. C'est ainsi que la demande de brevet FR 2.476.542 décrit un tel produit dont l'enveloppe est fermée par agrafage le long d'une génératrice, cette enveloppe présentant deux zones aplaties parallèles, et contenant une matière pulvérulente ou granulaire compactée. Ce produit est apte à être enroulé sur un tambour, puis déroulé et dressé de façon à l'introduire dans un bain métallique liquide, ou dans tout autre espace réactionnel.

L'expérience a cependant montré que suivant les caractéristiques de la bande métallique qui constitue l'enveloppe du produit, suivant les conditions d'agrafage, et suivant aussi les conditions d'enroulage du produit composite, on peut observer au déroulage une déformation de l'enveloppe le long de la zone agrafée.

Cette déformation se traduit par un desserrage plus ou moins localisé des plis formés lors de l'agrafage et peut aller jusqu'au dégrafage.

On a donc recherché la possibilité d'éviter les risques de dégrafage au cours des opérations d'enroulage et déroulage du produit composite tubulaire, sans faire obstacle à l'aptitude au dressage de ce produit après déroulage.

Le produit composite suivant l'invention, comporte une enveloppe métallique tubulaire, réalisée à partir d'une bande agrafée le long d'une génératrice, a l'intérieur de laquelle est logée de la matière pulvérulente ou granulaire compactée. La section droite du produit présente au moins deux zones aplaties en face l'une de l'autre, la zone d'agrafage se trouvant a l'interieur d'une des zones aplaties.

L'enveloppe présente sur sa paroi extérieure, à cheval sur la zone d'agrafage, des empreintes en creux, réalisées par déformation à froid du métal, en forme de rainures allongées transversalement par rapport à l'axe du produit dont la profondeur ne dépasse pas 60% de l'épaisseur de l'enveloppe. De préférence, ces empreintes sont orientées de façon que leur direction moyenne fasse par rapport à cet axe, un angle de 45 à 135°.

De préférence également, la distance moyenne "d" entre empreintes successives mesurée le long de l'axe d'une génératrice est inférieure au tiers de la distance entre les deux zones aplaties du produit composite.

Enfin, on utilise avantageusememt pour réaliser l'enveloppe du produit composite suivamt l'invention, un métal ductile tel qu'un acier doux écroui ou non écroui.

L'invention concerne aussi un procédé de réalisation du produit composite suivant l'invention, dans lequel on réalise les empreintes en faisant rouler sur la surface extérieure de l'enveloppe, à cheval sur la zone d'agrafage, avec une pression suffisante, un galet comportant des dents dont les arêtes s'impriment dans la paroi de l'enveloppe.

Enfin, l'invention concerne également une utilisation du produit composite suivant l'invention qui consiste à le stocker par enroulage sur un tambour en l'orientant de façon que la zone d'agrafage soit à l'extérieur, ce produit composite étant ensuite déroulé et éventuellement dressé en vue de son introduction dans un espace réactionnel.

Les figures, la description et l'exemple ci-après permettent de mieux comprendre de façon non limitative, les caractéristiques du produit composite suivant l'invention, ainsi que ses applications.

La figure 1 représente en perspective un tronçon du produit composite suivant l'invention.

La figure 2 représente, en vue fortement agrandie, une coupe longitudinale partielle suivant le plan de coupe B-B, perpendiculaire au plan de la face supérieure (5) du produit composite représenté figure 1, et parallèle à l'axe $X_1 X_2$ de ce produit.

La figure 3 représente, en vue de dessus, une variante de réalisation du produit composite suivant l'invention.

La figure 4 représente, en coupe, le développé d'une denture réalisée sur la périphérie d'un galet utilisé pour fabriquer le produit composite de la figure 1.

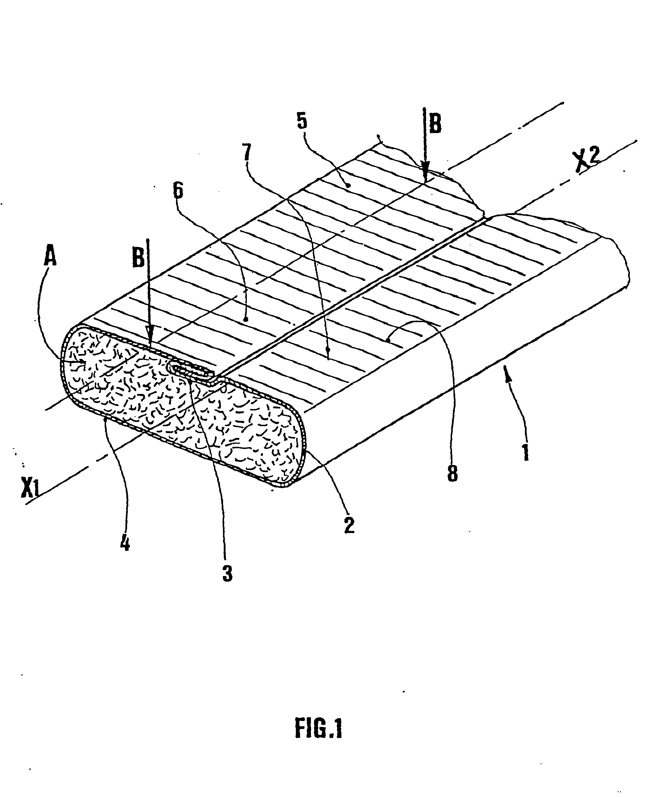

Le produit composite (1) appelé aussi fil fourré, représenté figure 1, est constitué d'une enveloppe métallique tubulaire (2) enserrant une âme faite d'une matière sous forme granulaire ou pulvérulente compactée visible en (A) dans un plan de coupe perpendiculaire à l'axe $X_1 X_2$ du produit composite. L'enveloppe tubulaire (2) est fermée par agrafage en (3) le long d'ume génératrice.

La section droite du fil fourré est voisine d'un rectangle et est formée de deux zones aplaties parallèles et opposées: la zone inférieure dont on voit seulement le bord (4) et la zone supérieure (5), qui sont raccordées par deux petits côtés plus ou moins arrondis. L'agrafe (3) est positionnée sur la face aplatie supérieure (5). Dans la zone d'agrafage, et de part et d'autre de celle-ci, en (6, 7) sont imprimées en creux, par déplacement à froid du métal, dans la surface supérieure (5), des empreintes (8) en forme de rainures semsiblement rectilignes disposées parallèlement les unes aux autres, à intervalles réguliers. La réalisatiom de ces rainures provoque un fort écrouissage du métal le long de celles-ci.

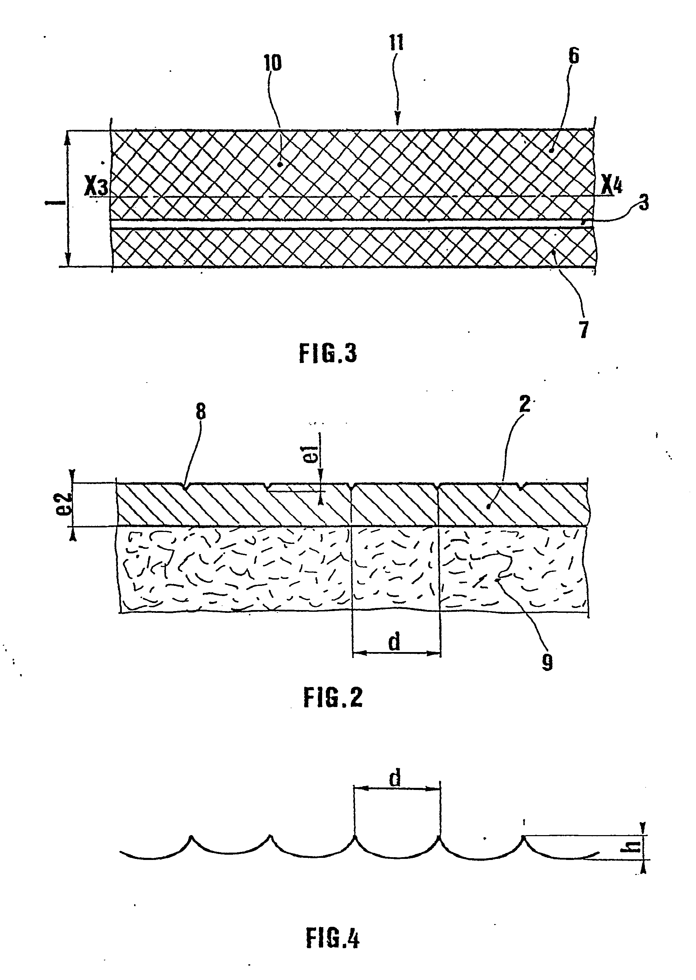

La figure 2 donne une idée précise de la déformation permanente imposée au métal le long des rainures telles que (8) imprimées dans l'épaisseur de l'enveloppe (2) qui enserre la matière qui constitue l'âme (9). La profondeur

des rainures "e " est de préférence comprise entre 10 et 60% de l'épaisseur "e$_2$" de l'enveloppe. La section des rainures (8) qui dams le cas présent est triangulaire peut prendre des formes diverses, l'objectif étant de créer des contraintes localisées aussi fortes que possible dans le métal.

Ces rainures sont imprimées dans le métal par tout moyen adéquat après agrafage et formage-compactage du fil fourré, et avant enroulage de celui-ci sur bobine ou tambour.

Ces rainures peuvent par exemple être réalisées par des galets montés sur la ligne de fabrication du fil fourré après compactage et avant enroulage. La surface de travail de ces galets dont la forme générale est adaptée à la forme générale du fil à fabriquer, comporte des dents régulièrement réparties, dont les arêtes successives forment par pression, les rainures suivant l'invention, à la surface extérieure de l'enveloppe à cheval sur la zone d'agrafage.

La figure 4 représente de façon schématique et partielle, le développé de la denture d'un galet utilisé pour réaliser le fil fourré de la figure 1. La hauteur (h) est nettement supérieure à la profondeur e$_1$ des rainures à réaliser. La distance "d" entre rainures est inférieure au tiers de la distance entre les deux zones aplaties du fil fourré.

Sur la figure 3, qui est une vue en plan de la zone supérieure (10) d'un tronçon de fil fourré (11), on a représenté une variante de réalisation de l'invention. Les empreintes sont ici réalisées sous forme de deux ensembles de rainures parallèles rapprochées à intervalles réguliers, les rainures du premier ensemble étant disposées sensiblement à 45° par rapport à l'axe X$_3$ X$_4$ du fil fourré et les rainures du deuxième ensemble étant croisées avec celles du premier ensemble et disposées sensiblement à 135° par rapport à ce même axe. On voit que ces rainures s'étendent de part et d'autre de la zone d'agrafage (3) en (6) et (7) pratiquement sur toute la surface de la zone supérieure (10) du produit (11).

On peut imaginer d'autres réalisations, rien n'obligeant les rainures à être droites et/ou parallèles. On peut aussi limiter la longueur des rainures de façon qu'elle soit inférieure à la largeur "1" du fil fourré.

La densité des reinures, c'est-a-dire la distance (d) qui les sépare doit être assez petite par rapport à l'épaisseur du fil et de préférence inférieure au tiers de cette épaisseur mesurée entre zones aplaties.

'.e métal de base constituant l'enveloppe est de préférence un métal ductile, peu écroui ou non écroui tel qu'un acier doux à l'état recuit qui n'a pas subi de déformations importantes et généralisées à froid, telles que des étirages ou laminages.

On constate que le produit composite selon l'invention peut être bobiné puis débobiné et dressé sans que la zone d'agrafage subisse de déformation localisée ou qu'il y ait risque d'ouverture de l'agrafe. On peut en particulier bobiner le fil fourré sur ses faces planes (4) (5), la face supérieure (5) sur laquelle se trouve l'agrafe étant orientée vers l'extérieur de la bobine.

**Exemple**

La technique décrite en figure 1 a été appliquée à la réalisation d'un fil fourré de caracteristiques suivantes:
- section du fil: 26 x 9 mm
- nature de la poudre compactée: silico-calcium à 30% de Ca
- enveloppe: acier doux épaisseur (e$_2$) 0,4 mm
- empreintes: rainures parallèles perpendiculaires à l'axe du fil distantes de 1,5 mm profondeur d'empreintes (e$_1$) 0,15 mm
- galet de formage: d = 1,5 mm h = 0,4 mm

Ce fil fourré a été utilisé comme fil de traitement en poche de bains d'acier liquide.

La même technique a été utilisée pour des fils semblables de section 16 x 7 mm.

**Revendications**

1. Produit composite comportant une enveloppe métallique tubulaire (2) réalisée à partir d'une bande agrafée (3) le long d'une génératrice à l'intérieur de laquelle est logée de la matière pulvérulente ou granulaire compactée (A), la section droite dudit produit présentant au moins deux zones aplaties (4, 5) en face l'une de l'autre, la zone d'agrafage (3) se trouvant à l'intérieur d'une des deux zones aplaties, caractérisé en ce que cette enveloppe présente sur sa paroi extérieure des empreintes en creux (8) réalisées par déformation à froid du métal en forme de rainures allongées transversalement par rapport à l'axe du produit, à cheval sur la zone d'agrafage, la profondeur de ces empreintes ne dépassant pas 60 % de l'épaisseur de l'enveloppe.

2. Produit composite suivant revendication 1, caractérisé en ce que les empreintes (8) sont orientées suivant une direction qui fait un angle compris entre 45 et 135° par rapport à l'axe du produit composite.

3. Produit composite suivant revendication 1 ou 2, caractérisé en ce que la distance moyenne "d" entre empreintes successives mesurée le long de l'axe d'une génératrice est inférieure au tiers de la distance entre les deux zones aplaties du produit composite.

4. Produit composite suivant l'une des revendications 1 à 3, caractérisé en ce que le metal dont est constituée l'enveloppe extérieure est non écroui ou peu écroui.

5. Produit composite suivant l'une des revendications 1 à 4, caractérisé en ce que l'enveloppe extérieure est en acier doux.

6. Produit composite suivant l'une des revendications 1 à 5, caractérisé en ce que les empreintes sont constituées de deux ensembles de rainures parallèles croisées.

7. Procédé de réalisation d'un produit composite, comportant une enveloppe métallique tubulaire réalisée à partir d'une bande agrafée le long d'une génératrice à l'intérieur de laquelle est logée de la matière pulvérulente ou granulaire compactée, la section droite dudit produit présentant au moins deux zones aplaties en face l'une de l'autre, la zone d'agrafage se trouvant à l'intérieur d'une des deux zones aplaties, ledit produit étant apte à l'enroulage sur tambour et au déroulage, caractérisé en ce qu'on réalise sur la surface extérieure de l'enveloppe des empreintes en creux allongées transversalement en faisant rouler sur cette surface, à cheval sur la zone d'agrafage, avec une pression suffisante, un galet comportant des dents dont les arêtes s'impriment dans la paroi de l'enveloppe.

8. Utilisation du produit composite suivant l'une des revendications 1 à 6, caractérisée en ce que on l'enroule sur un tambour de façon que la zone d'agrafage soit orientée vers l'extérieur, ce produit étant ensuite déroulé puis éventuellement dressé avant introduction dans un espace réactionnel.


**Patentansprüche**

1. Verbunderzeugnis mit einer rohrförmigen metallischen Hülle (2), die aus einem längs einer Mantellinie verklammerten Band (3) hergestellt ist und in der kompaktiertes pulverförmiges oder körniges Material (A) angeordnet ist, wobei der Querschnitt des Erzeugnisses wenigstens zwei einander gegenüberliegende abgeflachte Zonen (4, 5) aufweist und sich die Verklammerungszone (3) im Inneren einer der beiden abgeflachten Zonen befindet,
dadurch gekennzeichnet,
daß diese Hülle auf ihrer Außenwand durch Kaltverformung des Metalls hergestellte Einprägungen (8) in Form länglicher Rillen quer zur Achse des Erzeugnisses beidseits der Verklammerungszone aufweist, wobei die Tiefe dieser Einprägungen 60 % der Wanddicke nicht übersteigt.

2. Verbunderzeugnis nach Anspruch 1,
dadurch gekennzeichnet,
daß die Einprägungen (8) längs einer Richtung ausgerichtet sind, die einen Winkel im Bereich von 45 bis 135 ° zur Achse des Verbunderzeugnisses bildet.

3. Verbunderzeugnis nach Anspruch 1 oder 2,
dadurch gekennzeichnet,
daß der mittlere Abstand "d" zwischen aufeinanderfolgenden Einprägungen, längs der Achse einer Mantellinie gemessen, unter einem Drittel des Abstandes zwischen den zwei abgeflachten Zonen des Verbunderzeugnisses ist.

4. Verbunderzeugnis nach einem der Ansprüche 1 bis 3,
dadurch gekennzeichnet,
daß das Metall, woraus die äußere Hülle besteht, nicht oder wenig gehärtet ist.

5. Verbunderzeugnis nach einem der Ansprüche 1 bis 4,
dadurch gekennzeichnet,
daß die äußere Hülle aus weichem Stahl ist.

6. Verbunderzeugnis nach einem der Ansprüche 1 bis 5,
dadurch gekennzeichnet,
daß die Einprägungen aus zwei sich kreuzenden Gruppen paralleler Rillen bestehen.

7. Verfahren zur Herstellung eines Verbunderzeugnisses mit einer rohrförmigen metallischen Hülle, die aus einem längs einer Mantellinie verklammerten Band hergestellt wird und in der kompaktiertes pulverförmiges oder körniges Material angeordnet wird, wobei der Querschnitt des Erzeugnisses wenigstens zwei einander gegenüberliegende abgeflachte Zonen aufweist und sich die Verklammerungszone im Inneren einer der beiden abgeflachten Zonen befindet und wobei das Erzeugnis zum Aufwickeln auf eine Trommel und zum Abwickeln geeignet ist,
dadurch gekennzeichnet,
daß man auf der äußeren Oberfläche der Hülle quer längliche Einprägungen herstellt, indem man auf dieser Oberfläche beidseits der Verklammerungszone mit ausreichendem Druck eine Rolle mit Zähnen abrollen läßt, deren Kanten sich in die Wand der Hülle eindrücken.

8. Verwendung des Verbunderzeugnisses nach einem der Ansprüche 1 bis 6,
dadurch gekennzeichnet,
daß man es auf eine Trommel derart aufwickelt, daß die Verklammerungszone nach außen gerichtet ist, wobei dieses Erzeugnis nachfolgend abgewickelt und danach eventuell vor Einführung in einen Reaktionsraum gerichtet wird.


**Claims**

1. A composite product comprising a tubular metallic casing (2) produced from a strip (3) which is hooked along a generating line inside which some compacted powdered or granular substance (A) is housed, the cross-section of said product having at least two filattened regions (4, 5) facing one another, the hooking region (3) being located inside one of the flattened regions, characterised in that this casing has on its external wall hollow impressions (8) produced by cold deformation of the metal in the form of grooves extending transversely to the axis of the product, straddling the hooking region, the depth of these impressions not exceeding 60 % of the thickness of the casing.

2. A composite product according to claim 1, characterised in that the impressions (8) are orientated in a direction which forms an angle of between 45 and 135° with the axis of the composite product.

3. A composite product according to claim 1 or 2, characterised in that the mean distance "d" between successive impressions, measured along the axis of a generating line, is less than one third of the distance between the two flattened regions of the composite product.

4. A composite product according to one of claims 1 to 3, characterised in that the metal of which the external casing is constituted is not cold worked or is sparingly cold work.

5. A composite product according to one of claims 1 to 4, characterised in that the external casing is composed of mild steel.

6. A composite product according to one of claims 1 to 5, characterised in that the impressions are constituted by two groups of crossing parallel grooves.

7. A method of producing a composite product comprising a tubular metallic casing produced from a strip which is hooked along a generating line inside which some compacted powdered or granular substance is housed, the cross-section of said product having at least two flattened regions facing one another, the hooking region being located inside one of the two flattened regions, said product being adapted for winding on a drum and for unwinding, characterised in that hollow impressions extending transversely are produced on the external surface of the casing by causing a roller comprising teeth of which the edges are inprinted in the wall of the casing to roll with sufficient pressure on this surface, straddling of the hooking region.

8. Use of the composite product according to one of claims 1 to 6, characterised in that it is wound on a drum in such a way that the hooking region is orientated towards the exterior, this product subsequently being unwound then possibly being straightened before introduction into a reaction chamber.

FIG.1

**FIG.3**

**FIG.2**

**FIG.4**